# EUROPEAN PATENT SPECIFICATION

(11) **EP 3 264 218 B1**
(45) Date of publication and mention of the grant of the patent: **27.05.2020**
(21) Application number: 17170783.9
(22) Date of filing: 12.05.2017
(51) Int. Cl.: G05G 5/05, G05G 5/03, G05G 1/44

(54) **A PEDAL FEEL SIMULATING SYSTEM FOR A MOTOR VEHICLE**
PEDALGEFÜHLSIMULATIONSSYSTEM FÜR EIN KRAFTFAHRZEUG
SYSTÈME DE SIMULATION DE SENSATION DE PÉDALE POUR UN VÉHICULE AUTOMOBILE

(30) Priority: 17.05.2016 SE 1650657
(43) Date of publication of application: 03.01.2018
(73) Proprietor: CJ Automotive AB, 514 63 Dalstorp (SE)
(72) Inventor: WESCHKE, Carl Johan, 516 30 Dalsjöfors (SE)
(74) Representative: Bergenstråhle Group AB

(56) References cited:
- DE-A1- 3 412 318
- US-A1- 2002 100 341
- US-B2- 6 758 114

## Description

### Technical field

The invention considers a pedal feel simulating system for a motor vehicle.

### Background

Historically, motor vehicles such as cars had a purely mechanical pedal system for brakes, clutches and accelerator pedals. In such mechanical pedal systems, a pedal such as the clutch pedal was mechanically coupled to the gear box and to a coupling between the motor and the driving of the wheels so that when the driver pressed the clutch pedal, the gears of the gear box were disconnected and the motor was disconnected from the driving of the wheels via the mechanical coupling. Nowadays, car manufacturers are moving from mechanical pedal systems to electrical pedal systems. In electrical pedal systems, the car is controlled from a computer controlled system, actuated from the pedals in the car maneuvering different sensors. For example, the clutch system may be controlled depending on the position of the clutch pedal in relation to a position sensor, which position sensor sends signals to the computer controlled system, which in turn controls the gear box connection and the connection of the motor to the driving. In the electrical pedal systems, there is a need to simulate for the driver a purely mechanical pedal system so that the driver perceives that when he/she e.g. depresses the clutch pedal, the clutch system behaves as he/she is used to. This is important so that the driver feels comfortable behind the steering wheel. DE 3412318 shows a reference element of a device for adjusting the speed of a vehicle.

### Summary

It is an object of the invention to address at least some of the problems and issues outlined above. It is possible to achieve these objects and others by using a method and an apparatus as defined in the attached independent claims.

According to an aspect of the invention, a pedal feel simulating system for a motor vehicle is provided. The system comprises a bracket, a pedal arm pivotally coupled to the bracket at a pivot point; and a compressible elongated device for dampening a pivotal movement of the pedal arm around the pivot point. The elongated device has a longitudinal extension between a first end part coupled to the pedal arm and a second end part coupled to the bracket. The elongated device comprises a first spring parallel to the longitudinal extension of the elongated device, a first housing, and a second housing at least partly enclosing the first housing and partly enclosing the first spring. Either the first housing or the second housing is connected to the pedal arm and the one of the first housing and the second housing not being connected to the pedal arm is connected to the bracket. The elongated device further comprises a friction element arranged between the first housing and the second housing so as to enable an inertia in the pivotal movement of the pedal arm. Further, the first housing at least partly encloses the first spring and the friction element 36 partly encloses the first spring 33.

That the first spring is parallel to the longitudinal extension of the elongated device may signify that the first spring has an elongated extension direction parallel to the longitudinal extension direction of the elongated device, e.g. that the first spring is compressible in a direction parallel to the longitudinal extension of the elongated device. The first spring may be a coil spring. Alternatively, the first spring may be any other type of spring, such as a gas spring or a bungee. By such an arrangement, a cost-effective pedal feel simulating system is achieved that simulates the inertia that a driver experiences when pressing a pedal arm in a purely mechanically controlled pedal system, thanks to the friction element arranged between the first and the second housing. Thereby, the driver, when depressing and releasing the pedal arm, would experience that the pedal arm behaves as it would if the pedal system would have been a purely mechanical system. Further, by arranging the friction element so that it partly encloses the first spring, at the same time as the first housing as well as the second housing, between which the friction element is positioned, both at least partly enclose the first spring, the friction element will be positioned along the first spring, between the first and second housing, in such a way that the force the friction element exerts onto the first and second housing is independent of how much the first spring is compressed. Consequently, the counter force exerted by the friction element onto the pedal arm when depressing and releasing the pedal can be approximately constant over the pedal stroke. Hereby, a pedal feel is achieved having a hysteresis that is requested by some car manufacturers. The pedal system may be a clutch system. Alternatively, the pedal system may be a brake system or an accelerator system. The pivot point may be a pivot shaft.

According to an embodiment, the pedal system further comprises a position sensor for sensing a position of the pedal arm, the sensor being connected to a control system arranged for controlling a drive of the vehicle. By such a position sensor, the pedal system would send indications to the control system that controls the drive, e.g. drive train of the vehicle. The sensor may be electrically connected to the control system so that it sends electrical impulses to the control system. In case the pedal is a clutch pedal, the control system may in its turn control a connection between the clutch mechanism, the motor, the driving of the wheels and the gear box, in dependence of the signals from the sensor.

According to another embodiment, the elongated device further comprises a pressing device, positioned between the first housing and the friction element for radially pressing the friction element towards the second housing or positioned between the second housing and the friction element for radially pressing the friction element towards the first housing. By such a pressing device the friction element is pressed towards the first or second housing. Thereby the friction element may be positioned well. Also, the frictional force between the friction element and the first/second housing can be selected to an appropriate level by a selection of the force of the pressing device. Also, the pressing device makes the elongated device, and consequently the pedal system, more insensitive to wear and temperature change, since force changes are counteracted by the pressing device. The radial pressing device may either be arranged for pressing the friction element outwards, i.e. towards the second housing or to press the friction element inwards, i.e. towards the first housing. According to an embodiment, the pressing device is a leaf spring.

According to another embodiment, the friction element is positioned in a recess of the first housing or in a recess of the second housing. Thereby, the friction element is kept in position to the first/second housing and does not risk to follow the movement of the other housing opposite the housing having the recess. According to an embodiment, the friction element has a radial extension in relation to the longitudinal extension of the elongated device that is longer than the depth of the recess of the first/second housing. In other embodiments, the friction element may be connected to the first/second housing in any other possible way.

According to an embodiment the first spring is a coil spring.

According to an embodiment, the first end part of the elongated device is coupled to the pedal arm at a position between the pivot point and an end of the pedal arm where a driver of the vehicle is to press the pedal arm.

According to another embodiment, the compressible elongated device is coupled to the pedal arm and to the bracket in such a way that when the pedal arm is moved around the pivot point, the longitudinal direction of the first spring is varied which results in a varying spring force component directed towards the pivot point. In one alternative, the spring force component directed towards the pivot point is higher the more the pedal is pressed in order to compensate for the increasing force from the spring, the more the spring is depressed.

Further possible features and benefits of this solution will become apparent from the detailed description below.

### Brief description of drawings

The solution will now be described in more detail by means of exemplary embodiments and with reference to the accompanying drawings, in which:
Fig. 1 is a perspective view of a pedal feel simulating system according to an embodiment of the invention.
Fig. 2 is another perspective view of the system of fig. 1 where parts of the elongate member have been removed to show the inside of the elongate member.
Fig. 3 is a perspective close-up view of the elongate member of the system of fig. 1.
Fig. 4 is an exploded view of the elongate member of fig. 1.
Fig. 5a is a top view of the elongate member.
Fig. 5b is a cross-sectional view of the elongate member along section X-X in fig. 5a.
Fig. 6 is a side view of an embodiment of a pedal feel simulating system, when the pedal arm is in a first resting position.
Fig. 7 is a side view of the system of fig. 6 when the pedal arm is in a second depressed position.

### Detailed description

Briefly described, a pedal feel simulating system is provided that gives a cost-efficient solution for simulating, in an electrically controlled pedal system, the feel of a mechanical/hydraulic pedal system to a driver pressing the pedal of the electrically controlled pedal system. This is achieved by attaching a compressible elongated device between a pedal arm and a bracket/chassis of the motor vehicle so that the compressible device can be compressed when the driver presses the pedal arm. The compressible elongated device has a spring that provides a counter force to the force provided by the driver when pressing the pedal arm. Further, there is a friction element arranged between a first housing and a second housing of the compressible elongated device, which counteracts the compressing and de-compressing movement of the elongated device due to a frictional force that the friction element provides when the first and second housing moves in relation to each other in the direction of the elongated device. The friction element provides a hysteresis to the movement of the pedal up and down in relation to the force that the driver exerts to the pedal, which is similar to the hysteresis that a driver experiences in a purely mechanical/hydraulic pedal system.

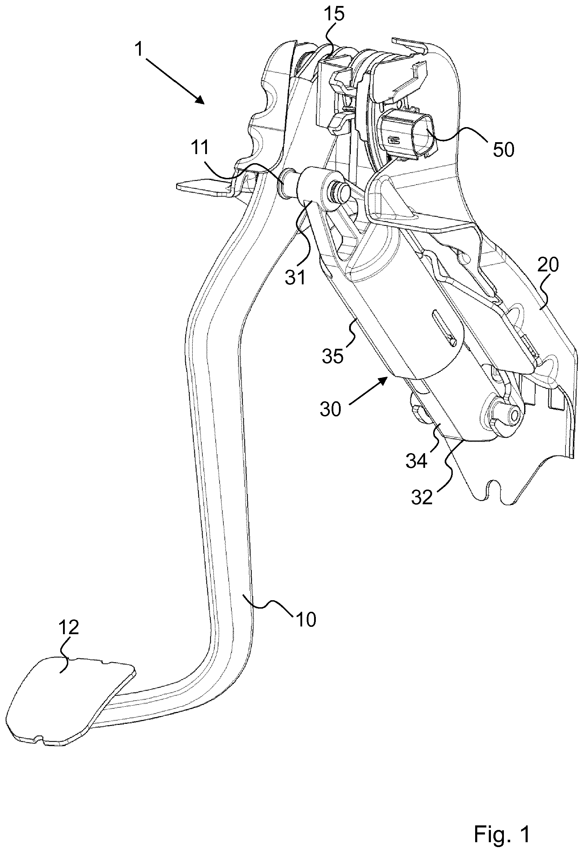

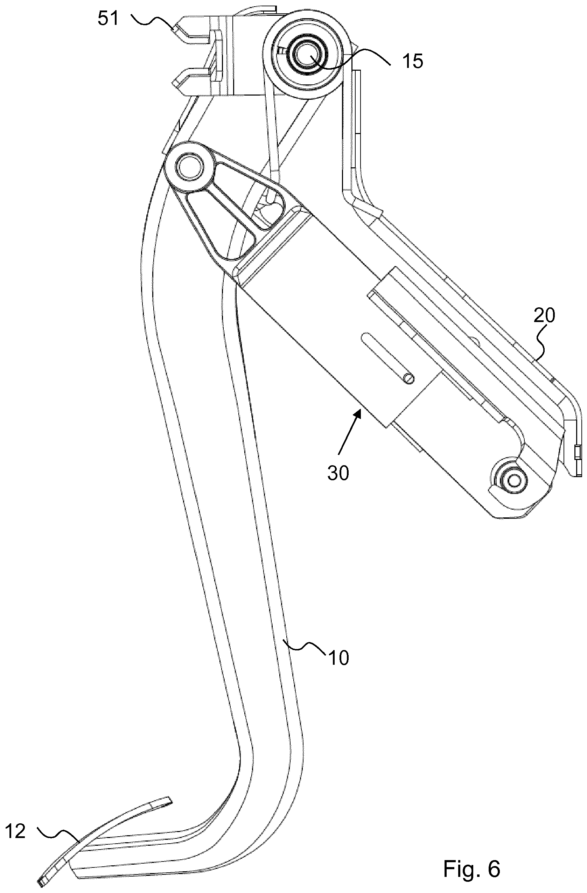

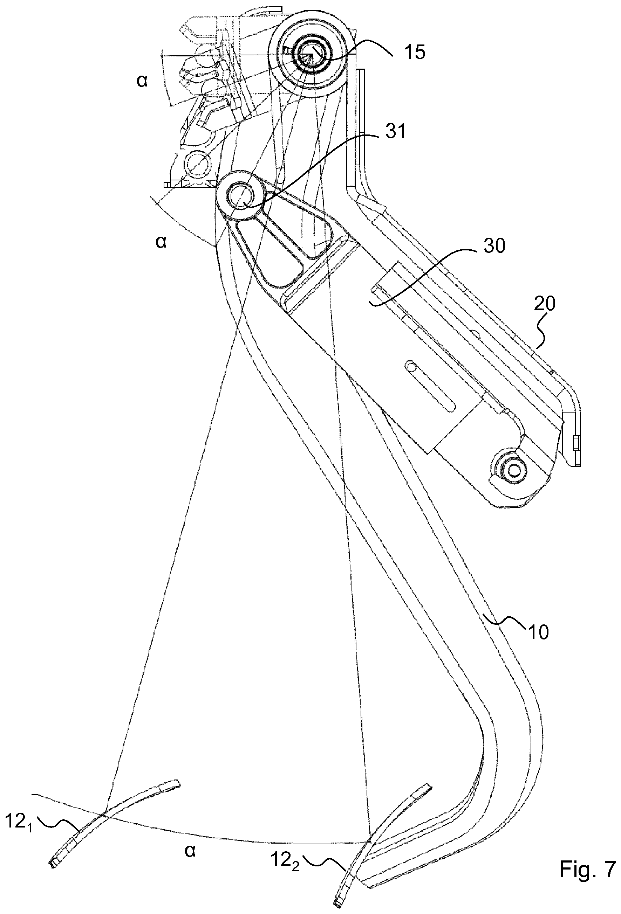

Fig. 1 shows a pedal system 1 according to an embodiment. The pedal system 1 comprises a pedal arm 10 pivotally connected via a pivot point 15 to a bracket 20 of a motor vehicle. As may be seen clearer in figs. 6 and 7, the pivot point 15 is realized as a pivot shaft on which a first end of the pedal arm 10 is pivotally connected to the bracket 20. The pedal arm 10 has, at its second end distal to the first end, a foot pedal 12 onto which a driver of the vehicle is to press when maneuvering the pedal arm. Further, there is a shaft 11 connected to the pedal arm 10, between the first end and the second end of the pedal arm. The pedal system further comprises a compressible elongated device 30, e.g. a compressible cylinder, attached with a first end 31 to the shaft 11. A second end 32 of the compressible elongated device 30 distal to the first end 31 is connected to the bracket 20. The elongated device 30 further comprises a first cylindrical housing 34 and a second cylindrical housing 35. The second housing 35 is firmly connected to the first end 31 of the elongated device. The first housing 34 is firmly connected to the second end 32 of the elongated device. The first and the second housing are co-axial with each other and with the elongated extension of the elongated device 30. The second housing 35 has a larger cross-sectional diameter than the first housing 34. The second housing is arranged to move axially in relation to the first housing depending on the pressure exerted on the pedal arm so as to surround more of the first housing the more the compressible elongated device is compressed. In an alternative embodiment that is not shown in the figures, the first housing has a larger cross-sectional diameter than the second housing and consequently surrounds more of the second housing the more the device 30 is compressed.

The pedal system 1 further comprises a position sensor for sensing a position of the pedal arm 10. In fig. 1, reference 50 points to a contact to which the position sensor is electrically connected. The actual position sensor is hidden in the figure. The contact 50 is arranged to receive an electrical cable that with its other end is to be connected to a control system arranged for controlling a drive of the vehicle so that positions sensed by the position sensor can be sent to the control system to control the vehicle drive accordingly.

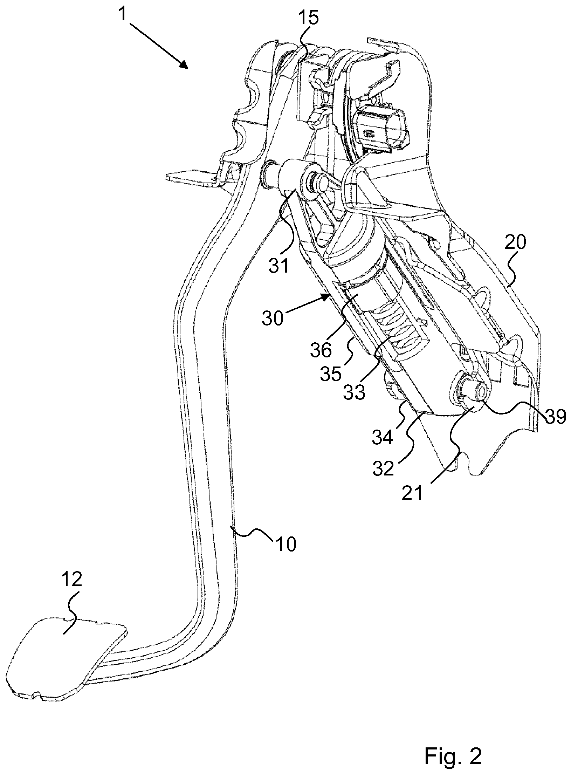

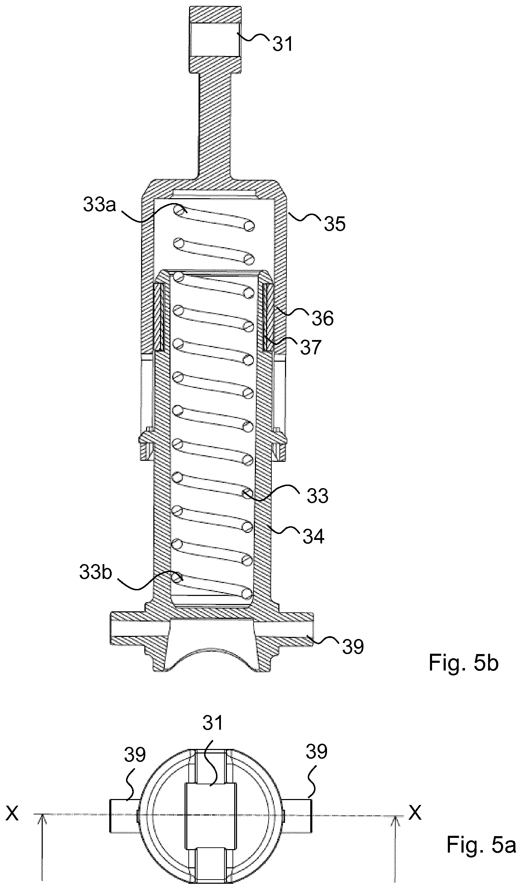

Fig. 2 shows the pedal system where parts of the first housing 34 and the second housing 35 of the compressible elongated device 30 has been taken away to reveal the inside of the elongated device 30. Consequently, a coil spring 33 arranged inside the elongated device is shown, as well as a friction element 36 arranged between the first and the second housing. Further, in fig. 2, the elongated device 30 comprises a protrusion 39 arranged at its second end 32. The protrusion 39 is arranged to be positioned in a receiving means 21 of the bracket so as to keep the elongated device in position to the bracket. As could be seen in fig. 5a there are two protrusions 39 arranged at opposite sides of the elongated device, each protrusion being arranged to be positioned in a receiving means 21 of the bracket.

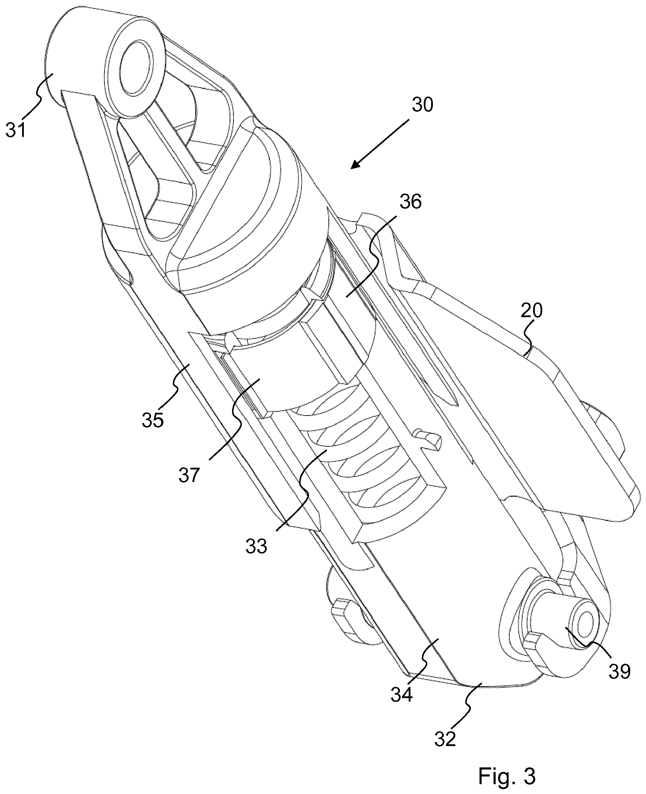

Fig. 3 is a close-up view of the compressible elongated device 30 where parts of the first housing 34 and the second housing 35 has been taken away to reveal the inside of the device 30. The elongated device 30 further comprises a leaf spring 37 positioned between the first housing 34 and the friction element 36 for radially pressing the friction element 36 towards the second housing 35.

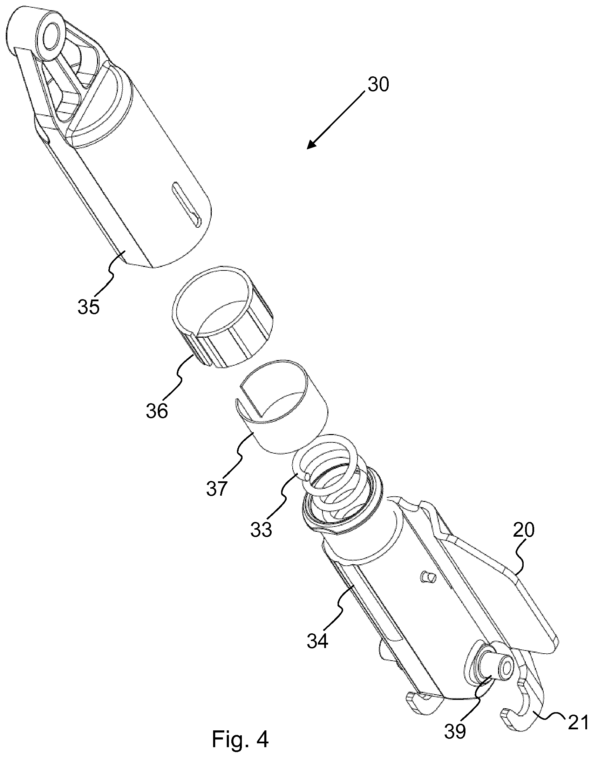

Figs. 4, 5a, 5b show different views of the compressible elongated device 30. The coil spring 33 is positioned inside the first housing 34. The leaf spring 37 is positioned outside the first housing, pressing outwardly onto the friction element 36, which is then pressed towards the second housing 35, thereby causing a friction force counteracting the movement of the second housing in relation to the first housing. As seen in fig. 5b, the friction element 36 is arranged radially outside the coil spring 33. The friction element encloses a part of the coil spring 33, i.e. the friction element 36 surrounds the coil spring 33 at a part of the coils spring in its longitudinal direction. The friction element 36 encloses different parts of the coil spring depending on how compressed the coil spring 33 is. The second housing 35 encloses a part of the first housing 34. The second housing 35 encloses a larger part of the first housing 34 the more compressed the coil spring 33 is. The second housing 35 encloses a first part of the coil spring 33. The first housing 34 encloses a second part of the coil spring 33. The first part of the coil spring 33 extends from a first end 33a of the coil spring attached to the second housing 35. The second part of the coil spring 33 extends from a second end 33b of the coil spring attached to the first housing 34. The friction element 36 is positioned between the first and second housing 34, 35 and encloses the coil spring 33 so that the friction force the friction element 36 exerts onto the first and second housing 34, 35 is approximately constant, i.e. independent, on how compressed the coil spring 33 is.

Fig. 6 shows an embodiment of the pedal system when the pedal arm 10 is in a first resting position, i.e. when there is no force applied to the foot pedal 12. The pedal system comprises a sensor carrier 51 that carries a rotatable part of the position sensor. The position sensor comprises a rotatable part that follows the movement of the pedal arm and a static part that does not follow the movement of the arm. The position sensor detects the position of the rotatable part in relation to the static part. The rotatable part may be a magnet and the static part may comprise electronics that performs the position detection by detecting the position of the magnet in relation to itself. Fig. 7 shows the pedal system when the pedal arm 10 is in a second position where the foot pedal 12 is pressed down. In fig. 7 also the first position is indicated. The foot pedal 12 in the first position has been given reference number 12₁, whereas the foot pedal in the second position has been given reference number 12₂. Fig. 7 illustrates that the angle α between the first position and the second position for the pedal arm is the same also between the first position and the second position of the position sensor as well as the first and the second position of the first end 31 of the elongated device 30. As the sensor carrier 51 is rotatable around the pivot shaft 15 and follows the movement of the pedal arm, the position of the pedal arm is correctly detected by the sensor, and its position can be sent to a control system to control the vehicle in accordance with the position of the pedal arm.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. A pedal feel simulating system (1) for a motor vehicle, the system comprising:
a bracket (20),
a pedal arm (10) pivotally coupled to the bracket (20) at a pivot point (15);
a compressible elongated device (30) for dampening a pivotal movement of the pedal arm around the pivot point (15), the elongated device having a longitudinal extension between a first end part (31) coupled to the pedal arm (10) and a second end part (32) coupled to the bracket (20), wherein the elongated device comprises:
a first spring (33) parallel to the longitudinal extension of the elongated device (30);
a first housing (34) at least partly enclosing the first spring (33);
a second housing (35) at least partly enclosing the first housing (34) and partly enclosing the first spring (33), wherein either the first housing (34) or the second housing (35) is connected to the pedal arm (10) and the one of the first housing and the second housing not being connected to the pedal arm is connected to the bracket (20),
a friction element (36) arranged between the first housing (34) and the second housing (35) so as to enable an inertia in the pivotal movement of the pedal arm, wherein the friction element (36) partly encloses the first spring (33), **characterized in that** the elongated device further comprises:
a pressing device (37), positioned between the first housing (34) and the friction element (36) for radially pressing the friction element towards the second housing (35) or positioned between the second housing (35) and the friction element (36) for radially pressing the friction element towards the first housing (34), wherein the pressing device (37) is a leaf spring.

2. Pedal system according to claim 1, further comprising a position sensor for sensing a position of the pedal arm (10), the sensor being connected to a control system arranged for controlling a drive of the vehicle.

3. Pedal system according to claim 1 or 2, wherein the friction element (36) is positioned in a recess of the first housing or in a recess of the second housing.

4. Pedal system according to any of the preceding claims, wherein the first spring (33) is a coil spring.

5. Pedal system according to any of the preceding claims, wherein the first end part (31) of the elongated device (30) is coupled to the pedal arm (10) at a position between the pivot point (15) and an end (12) of the pedal arm (10) where a driver of the vehicle is to press the pedal arm.

6. Pedal system according to any of the preceding claims, wherein the compressible elongated device (30) is coupled to the pedal arm (10) and to the bracket (20) in such a way that when the pedal arm is moved around the pivot point (15), the longitudinal direction of the first spring (33) is varied which results in a varying spring force component directed towards the pivot point (15).

7. Pedal system according to claim 6, wherein the longitudinal direction of the first spring (33) is varied when the pedal arm (10) is moved around the pivot point (15) in such a way that the spring force component directed towards the pivot point is higher the more a pedal of the pedal arm is pressed in order to compensate for an increasing force from the first spring, the more the first spring is depressed.

## Patentansprüche

1. Pedalgefühlsimulationssystem (1) für ein Kraftfahrzeug, wobei das System Folgendes umfasst:
eine Halterung (20),
einen Pedalarm (10), an einem Drehpunkt (15) schwenkbar mit der Halterung (20) gekoppelt;
eine zusammendrückbare längliche Vorrichtung (30) zum Dämpfen einer Schwenkbewegung des Pedalarms rund um den Drehpunkt (15), wobei die längliche Vorrichtung eine Längserstreckung zwischen einem ersten Endteil (31), gekoppelt mit dem Pedalarm (10), und einem zweiten Endteil (32), gekoppelt mit der Halterung (20), aufweist, wobei die längliche Vorrichtung ferner Folgendes umfasst:
eine erste Feder (33), parallel zur Längserstreckung der länglichen Vorrichtung (30);
ein erstes Gehäuse (34), das zumindest die erste Feder (33) teilweise einschließt;
ein zweites Gehäuse (35), das zumindest das erste Gehäuse (34) teilweise einschließt und die erste Feder (33) teilweise einschließt, wobei entweder das erste Gehäuse (34) oder das zweite Gehäuse (35) mit dem Pedalarm (10) verbunden ist, und wobei das eine aus dem ersten Gehäuse und dem zweiten Gehäuse, das nicht mit dem Pedalarm verbunden ist, mit der Halterung (20) verbunden ist,
ein Reibungselement (36), angeordnet zwischen dem ersten Gehäuse (34) und dem zweiten Gehäuse (35), um eine Trägheit in der Schwenkbewegung des Pedalarms zu ermöglichen, wobei das Reibungselement (36) teilweise die erste Feder (33) einschließt, **dadurch gekennzeichnet,**
**dass** die längliche Vorrichtung ferner Folgendes umfasst: eine Drückvorrichtung (37), positioniert zwischen dem ersten Gehäuse (34) und dem Reibungselement (36) zum radialen Drücken des Reibungselements in Richtung des zweiten Gehäuses (35), oder positioniert zwischen dem zweiten Gehäuse (35) und dem Reibungselement (36) zum radialen Drücken des Reibungselements in Richtung des ersten Gehäuses (34), wobei die Drückvorrichtung (37) eine Blattfeder ist.

2. Pedalsystem nach Anspruch 1, ferner umfassend einen Positionssensor zum Erfassen einer Position des Pedalarms (10), wobei der Sensor mit einem Steuersystem verbunden ist, das zum Steuern eines Antriebs des Fahrzeugs angeordnet ist.

3. Pedalsystem nach Anspruch 1 oder 2, wobei das Reibungselement (36) in einer Vertiefung des ersten Gehäuses oder in einer Vertiefung des zweiten Gehäuses positioniert ist.

4. Pedalsystem nach einem der vorhergehenden Ansprüche, wobei die erste Feder (33) eine Schraubenfeder ist.

5. Pedalsystem nach einem der vorhergehenden Ansprüche, wobei der erste Endteil (31) der länglichen Vorrichtung (30) an einer Position zwischen dem Drehpunkt (15) und einem Ende (12) des Pedalarms (10), an dem ein Fahrer des Fahrzeugs den Pedalarm drücken soll, mit dem Pedalarm (10) gekoppelt ist.

6. Pedalsystem nach einem der vorhergehenden Ansprüche, wobei die zusammendrückbare längliche Vorrichtung (30) mit dem Pedalarm (10) und der Halterung (20) in einer Weise gekoppelt ist, dass, wenn der Pedalarm um den Drehpunkt (15) bewegt wird, die Längsrichtung der ersten Feder (33) variiert wird, was zu einer variierenden Federkraftkomponente in Richtung des Drehpunkts (15) führt.

7. Pedalsystem nach Anspruch 6, wobei die Längsrichtung der ersten Feder (33) variiert wird, wenn der Pedalarm (10) rund um den Drehpunkt (15) bewegt wird, in einer Weise, dass die in Richtung des Drehpunkts gerichtete Federkraftkomponente umso höher ist, je mehr ein Pedal des Pedalarms gedrückt wird, um eine Kraft von der ersten Feder zu kompensieren, die höher wird, je mehr die erste Feder durchgedrückt wird.

## Revendications

1. Système de simulation de sensation de pédale (1) pour un véhicule automobile, le système comprenant :
un support (20),
un bras de pédale (10) accouplé de manière pivotante au support (20) au niveau d'un point de pivot (15) ;
un dispositif allongé compressible (30) pour amortir un mouvement de pivotement du bras de pédale autour du point de pivot (15), le dispositif allongé ayant une extension longitudinale entre une première partie d'extrémité (31) accouplée au bras de pédale (10) et une seconde partie d'extrémité (32) accouplée au support (20), le dispositif allongé comprenant :
un premier ressort (33) parallèle à l'extension longitudinale du dispositif allongé (30) ;
un premier logement (34) enfermant au moins partiellement le premier ressort (33) ;
un second logement (35) enfermant au moins partiellement le premier logement (34) et enfermant partiellement le premier ressort (33), soit le premier logement (34) soit le second logement (35) étant relié au bras de pédale (10) et celui du premier logement et du second logement qui n'est pas relié au bras de pédale étant relié au support (20),
un élément de friction (36) disposé entre le premier logement (34) et le second logement (35) de sorte à permettre une inertie dans le mouvement de pivotement du bras de pédale, l'élément de friction (36) enfermant partiellement le premier ressort (33), **caractérisé en ce que** le dispositif allongé comprend en outre :
un dispositif de pression (37), positionné entre le premier logement (34) et l'élément de friction (36) pour presser radialement l'élément de friction vers le second logement (35) ou positionné entre le second logement (35) et l'élément de friction (36) pour presser radialement l'élément de friction vers le premier logement (34), le dispositif de pression (37) étant un ressort à lames.

2. Système de pédale selon la revendication 1, comprenant en outre un capteur de position pour détecter une position du bras de pédale (10), le capteur étant relié à un système de commande conçu pour commander une conduite du véhicule.

3. Système de pédale selon la revendication 1 ou 2, l'élément de friction (36) étant positionné dans un évidement du premier logement ou dans un évidement du second logement.

4. Système de pédale selon l'une quelconque des revendications précédentes, le premier ressort (33) étant un ressort hélicoïdal.

5. Système de pédale selon l'une quelconque des revendications précédentes, la première partie d'extrémité (31) du dispositif allongé (30) étant accouplée au bras de pédale (10) à une position entre le point de pivot (15) et une extrémité (12) du bras de pédale (10) où un conducteur du véhicule doit appuyer sur le bras de pédale.

6. Système de pédale selon l'une quelconque des revendications précédentes, le dispositif allongé compressible (30) étant accouplé au bras de pédale (10) et au support (20) de sorte que lorsque le bras de pédale est déplacé autour du point de pivot (15), la direction longitudinale du premier ressort (33) soit modifiée, ce qui a pour conséquence une composante de force de ressort variable dirigée vers le point de pivot (15).

7. Système de pédale selon la revendication 6, la direction longitudinale du premier ressort (33) étant modifiée lorsque le bras de pédale (10) est déplacé autour du point de pivot (15) de sorte que la composante de force de ressort dirigée vers le point de pivot soit plus élevée plus une pédale du bras de pédale est enfoncée afin de compenser une force croissante provenant du premier ressort, plus le premier ressort est enfoncé.
